# EUROPÄISCHE PATENTSCHRIFT

(11) **EP 1 800 270 B1**
(45) Veröffentlichungstag und Bekanntmachung des Hinweises auf die Patenterteilung: **17.09.2008**
(21) Anmeldenummer: 05801870.6
(22) Anmeldetag: 07.10.2005
(51) Int. Cl.: G07C 9/00

(54) **VERFAHREN, SCHALTUNGSEINRICHTUNG UND SYSTEM ZUR SIGNALÜBERTRAGUNG ÜBER DEN MENSCHLICHEN KÖRPER**
METHOD, CIRCUIT AND SYSTEM FOR TRANSFERRING SIGNALS VIA THE HUMAN BODY
PROCEDE, MONTAGE ET SYSTEME POUR TRANSMETTRE DES SIGNAUX PAR LE CORPS HUMAIN

(30) Priorität: 07.10.2004 DE 102004048956; 06.04.2005 DE 102005015802
(43) Veröffentlichungstag der Anmeldung: 27.06.2007
(73) Patentinhaber: Ident Technology AG, 82234 Wessling (DE)
(72) Erfinder: FASSHAUER, Peter, 85579 Neubiberg (DE)
(74) Vertreter: Rössig, Rolf
(86) Internationale Anmeldenummer: PCT/EP2005/010846
(87) Internationale Veröffentlichungsnummer: WO 2006/040095

(56) Entgegenhaltungen:
- US-B1- 6 211 799
- POST E R ET AL: "Intrabody buses for data and power" WEARABLE COMPUTERS, 1997. DIGEST OF PAPERS., FIRST INTERNATIONAL SYMPOSIUM ON CAMBRIDGE, MA, USA 13-14 OCT. 1997, LOS ALAMITOS, CA, USA,IEEE COMPUT. SOC, US, 13. Oktober 1997 (1997-10-13), Seiten 52-55, XP010251542 ISBN: 0-8186-8192-6

## Beschreibung

Die Erfindung richtet sich auf ein Verfahren sowie eine anwenderseitig tragbare Schaltungseinrichtung zur Übertragung von Signalen innerhalb eines einen Anwender umgebenden Nahbereichs, insbesondere unter Einbeziehung des Körpers desselben. Die Erfindung betrifft weiterhin auch ein unter Einschluss jener tragbaren Schaltungseinrichtung gebildetes System, insbesondere auch die Gegenkomponente zur mobilen Schaltunngseinrichtung.

Aus US PS 6,211,799 ist eine Schaltung zur Bewerkstelligung eines Signaltransfers über den menschlichen Körper bekannt. Diese Schaltung umfasst eine an einen Schwingkreis angebundene Elektrodeneinrichtung. Der Schwingkreis wiederum umfasst einen nach Maßgabe eines Mikrokontrollers ansteuerbaren Schalter über welchen durch selektive Zuschaltung eines induktiven, kapazitiven oder ohmschen Schaltungselementes die Schwingkreisfrequenz verändert werden kann.

Die Erfindung richtet sich insbesondere, jedoch nicht ausschließlich auf Applikationen dieser Technik im Zusammenhang mit anwenderseitig zu führender Komfortelektronik, zur Erbringung von Autorisierungsnachweisen, Systemen zur bargeldlosen Zahlungs- und Wertstellungsabwicklung, Scheckkartensystemen, sowie auch allgemeinen Zugangssteuerungssystemen, Keyless-Access Systemen für Kraftfahrzeuge, anderweitigen Türsystemen, sowie Systemen zur automatischen Konfiguration eines konfigurierbaren Umfeldes eines Anwenders.

Ansätze zur Übertragung von Signalen auf Grundlage von kapazitiven bzw. elektrostatischen Wechselwirkungsprinzipien sind als solche bekannt. Beispielhaft wird diesbezüglich auf die auf die Anmelderin zurückgehenden und bereits veröffentlichten Patentanmeldungen DE 102 38 134 A1, DE 102 45 181 A1, DE 102 52 580 A1, DE 103 05 341 A1 und DE 10 2005 013 008 A1 verwiesen. Im Vorgriff auf die nachfolgend noch näher dargelegten Einzelheiten, wird darauf verwiesen, dass insbesondere die in den vorgenannten Anmeldungen beschriebenen Techniken vorteilhaft in Verbindung mit der nachfolgend spezifizierten Technik kombiniert und ausgebaut werden können, und dass sich insoweit ergebende Lösungen als solche auch Gegenstand der vorliegenden Erfindung sind.

### Zum physikalischen Hintergrund:

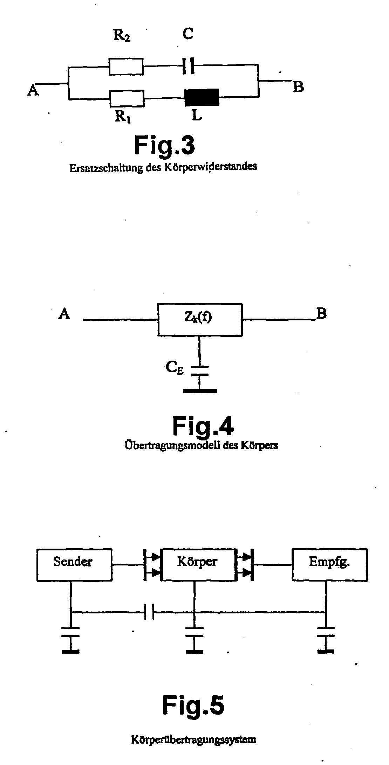

Die Eigenschaft von tierischen und menschlichen Körpern, elektrischen Strom zu leiten, ist seit dem Beginn der Elektrotechnik vor über 200 Jahren bekannt (z.B. Froschschenkelversuch von Galvani 1786). Eingehendere Untersuchungen hierzu wurden jedoch erst ca. 1960 im Hinblick auf biologische Probleme von R.und K. Cole durchgeführt mit dem Ziel, ein Modell zu entwickeln, das den elektrischen Widerstand ( Impedanz ) des Körpers genauer erfasst und mit einem äquivalenten Ersatzbild (Figur 3) kennzeichnet. In dieser Darstellung repräsentiert R₁ die extrazellulare Flüssigkeit und L die Induktivität der Blutgefäße. Die intrazellularen Eigenschaften werden durch eine Kapazität C und jenen Serienwiderstand R₂ beschrieben. Hierbei wird das elektrische Verhalten der Zellstrukturen, sowie intra- und extrazellularer Körperflüssigkeiten berücksichtigt. Das Ergebnis dieser Untersuchungen führt zu dem in Figur 3 angegebenen elektrischen Netzwerk .

Insgesamt stellt der Körper zwischen zwei Punkten A und B eine von der Frequenz f abhängige komplexe Impedanz Zₖ (f) dar, deren Werte im einzelnen personenabhängig streuen. Außerdem sind die Werte auch von den Speisepunkten A und B am Körper abhängig.

Ein weiterer Parameter, der das Übertragungsverhalten des Körpers für elektrische Signale wesentlich beeinflusst, ist die Kapazität C_{E} des Körpers gegen Erde, die ca. 100 pF beträgt. Damit ergibt sich dann zunächst das in Figur 4 dargestellte lineare Übertragungsmodell. Die Linearität kann mit hinreichender Genauigkeit vorausgesetzt werden, da alle hier über den Körper übertragenen Signalströme sehr klein sind ( im Bereich < 1µA). Die Nutzung der elektrischen Eigenschaften des Körpers zur Übertragung von Datensignalen wurde schon 1984 realisiert (GB 2 129 176). Eine Untersuchung der damit verbundenen Probleme erfolgte 1995 am MIT im Rahmen einer Master Thesis von T.G.Zimmerman (T.G. Zimmerman: Personal Area Networks (PAN): Near-Field Intra- Body Communication, M.S.thesis, MIT Media Laboratory, Cambridge, MA, 9/1995).

Ausgehend von der Verteilung des elektrischen Feldes eines Körpers entwickelte Zimmerman ein Modell eines Übertragungssystems, mit dem von einem Generator durch kapazitive Kopplung über den Körper Daten zu einem Empfänger gesendet werden können. Er nannte es daher " Personal Area Network (PAN).

Für verschiedene Anwendungen dieser neuartigen Technologie wurde eine Reihe von US-Patenten angemeldet, z.B. in E. R. Post et al.: Method and Apparatus for Transbody Transmission of Power and Information , US Patent 6.211.799 B1 , 11/ 1997, sowie J. E. Brooks: Keyless Entry System, US Patent 5.204.672, 1/1991. Empirische Messungen unter verschiedenen Einkopplungsbedingungen wurden in K. Partridge et al.: Empirical Measurements of Intrabody Communication Performance under Varied Physical Configurations, Vortrag an der Stanford University, 26.2.2003 durchgeführt. Gegenstand dieser Thematik war auch eine Bachelor Thesis ( Honours) an der Universität von Queensland mit dem Ziel, elektronische Geräte über den Körper zu vernetzen ( " Body Net Technohogy").

Allen neueren Arbeiten gemeinsam ist das Prinzip, auf der Senderseite mittels einer Elektrode das zu übertragende Signal kapazitiv in den Körper einzukoppeln und ebenso empfangsseitig auszukoppeln. Der Rückweg des "Stromkreises" wird dabei durch die Erdkapazitäten von Sender und Empfänger oder durch direkte kapazitive Kopplung zwischen den Masse-Elektroden gebildet , wie in Figur 5 dargestellt.

Im Unterschied zu einer Funkübertragung mit elektromagnetischen Wellen wird hierbei das elektrische Feld mit einer sehr begrenzten Reichweite von einigen Dezimetern genutzt, mit dem Vorteil einer praktisch leistungslosen Übertragung. Die Ursache hierfür liegt in der Möglichkeit der Verwendung relativ niedriger Trägerfrequenzen von einigen hundert Kilohertz, die zu quasistatischen Feldern führen, d.h. Feldern für welche weitgehend die für statische Felder zutreffenden physikalischen Ansätze gelten.

### Aufgabe der Erfindung

Der Erfindung liegt die Aufgabe zugrunde, Lösungen bereitzustellen, die es ermöglichen, auf Grundlage des vorangehend beschriebenen physikalischen Wechselwirkungsprinzips, d.h. mittels quasi-elektrostatischer Felder über den Körper einer Person, insbesondere Anwenders dieser Technik und/oder dessen Umfeld, im Bedarfsfall einen hinreichend zuverlässigen Signaltransfer unter Verwendung wenigstens einer anwenderseitig zu führenden Komponente zu ermöglichen, wobei die anwenderseitig zu führende Komponente sich durch einen insgesamt gesehen geringen Energieverbrauch auszeichnet.

Diese Aufgabe wird gemäß einem ersten Aspekt der vorliegenden Erfindung gelöst durch ein Verfahren zur Signalübertragung auf Grundlage quasi-elektrostatischer Wechselwirkungseffekte unter Verwendung einer anwenderseitig zu führenden Schaltungseinrichtung, bei welchem als Signalschnittstelle eine Kondensatoreinrichtung verwendet wird, die in einen Schwingkreis eingebunden ist, wobei während des Betriebs der Schaltungseinrichtung in einem Empfangsmodus der Schwingkreis als Parallel-Schwingkreis betrieben wird und der Schwingkreis in einem Sendemodus als Serienschwingkreis betrieben wird.

Dadurch wird es auf vorteilhafte Weise möglich, eine zur Abwicklung dieses Verfahrens vorgesehene Schaltung im Rahmen des Empfangsmodus unter einem äußerst geringen Energiebezug zu betreiben. Eine entsprechende Schaltungseinrichtung kann dadurch mit einer relativ kleinen Energiespeichereinrichtung über einen großen Zeitraum hinweg in einem funktionsbereiten Zustand verharren.

Die Anbindung des Serienschwingkreises erfolgt vorzugsweise unter Einschluss eines Übertragers. Der Übertrager ist vorzugsweise durch eine Spulenanordnung gebildet. Die Spulenanordnung kann so ausgebildet sein, dass durch diese eine definierte Spannungserhöhung erreichbar ist. Das Verfahren wird unter Verwendung der die Signalschnittstelle bildenden Kondensatoreinrichtung so abgewickelt, dass der Empfangsmodus und der Sendemodus zueinander zeitversetzt sind.

Im Rahmen des Empfangsmodus kann ein Wecksignal über die Signalabgriffseinrichtung abgegriffen werden. Das Wecksignal kann einen Dateninhalt haben, oder auch bereits durch Erfüllung eines bestimmten Frequenz- und Intensitätskriteriums erfüllt sein. Das Wecksignal kann von einer zur Kommunikation mit dem Schwingkreis vorgesehenen Dialogstation generiert werden.

Das an der Signalabgriffseinrichtung anliegende, seitens der Dialogstation generierte Signal, insbesondere Wecksignal kann so generiert werden, dass dieses einen Träger enthält. Das an der Signalabgriffseinrichtung anliegende Signal kann weiterhin auch ein Synchronisations- oder Timer-Signal enthalten. Vorzugsweise wird der Träger auf der Seite der Dialogstation verwendet ohne aus dem Empfangssignal erneut extrahiert zu werden. Die Schaltungseinrichtung kann im Rahmen des Sendemodus nach wenigstens einem der nachfolgenden Modulationsverfahren betrieben wird: ASK, FSK, PSK oder QPSK.

Der Schwingkreis wird im Rahmen des Empfangsmodus mit einer anderen Induktivität betrieben wird, als im Rahmen des Sendemodus. Das im Rahmen des Sendemodus abgegebene Signal kann auf Grundlage eines während eines vorangegangenen Empfangsmodus empfangenen Signalinhaltes verschlüsselt oder konditioniert werden.

Über einen im Rahmen des Empfangsmodus empfangenen Signalinhalt kann eine Synchronisation oder Abstimmung der zeitlichen Lage des im Rahmen des Sendemodus nach Maßgabe des Mikrokontrollers in den Parallel-Schwingkreis eingekoppelten Signals erfolgen, zur Vermeidung von Überlagerungen mit weiteren Kommunikationskomponenten.

Die Erfindung richtet sich auch auf eine Schaltungseinrichtung an sich, zur Abwicklung eines Signaltransfers auf Grundlage quasi-elektrostatischer Wechselwirkungseffekte, mit einer als Signalschnittstelle fungierenden Kondensatoreinrichtung, die in einen Schwingkreis eingebunden ist, wobei die Schaltungseinrichtung derart konfiguriert ist, dass während des Betriebs der Schaltungseinrichtung in einem Empfangsmodus, der Schwingkreis als Paralle-Schwingkreis geschaltet ist und im Rahmen des Sendemodus als Serienschwingkreis geschaltet ist.

Der Schwingkreis ist vorzugsweise unter Einschluss eines Übertragers an einen Mikrokontroller angekoppelt und die Anbindung des Schwingkreises an den Mikrokontroller erfolgt im Rahmen des Empfangsmodus über ein hochohmiges Signalabgriffssystem (z.B. Komparator).

Die Schaltungseinrichtung ist mit Vorteil derart konfiguriert und aufgebaut, dass eine funktionale Umschaltung aus einer im Empfangsmodus herrschenden passiven Konfiguration in einen Sendebetrieb im Wege einer Port- oder Impedanzumschaltung bewerkstelligbar ist.

Im Rahmen der Port- oder Impedanzumschaltung wird vorzugsweise zwischen einem für den Empfangsbetrieb vorgesehen Parallel-schwingkreis der zwei in Serie angeordneten Induktivitäten und einen hierzu parallelen Kondensator umfasst und einem Serienschwingkreis gewechselt, wobei das Verhalten des Serienschwingkreis hauptsächlich durch eine außerhalb des Übertragers liegende Induktivität (eine der beiden in Serie geschalteten Induktivitäten) und dem als Signalschnittstelle vorgesehenen Kondensator bestimmt ist.

Im Sendefall übernimmt vorzugsweise der Übertrager aus L1, L2 die Funktion einer Spannungserhöhung, während er im Empfangsbetrieb mit der Induktivität L2 auch Teil des Parallelschwingkreises ist.

Im Empfangsbetrieb ist vorzugsweise die Resonanzfrequenz des Parallelschwingkreises niedriger als beim Serienschwingkreis im Sendefall. Insofern wird es möglich, in beiden Richtungen der bidirektionalen Übertragung mit zwei unterschiedlichen Frequenzen zu operieren.

Es ist möglich, insbesondere unter Einschluss des Übertragers oder auch durch direkte Anbindung des Serienschwingkreises an den Mikrokontroller oder eine Zwischenstufe in den Serienschwingkreis einen Dateninhalt nach Maßgabe einer QPSK-Modulation einzukoppeln. Die beiden hierzu erforderlichen orthogonalen Trägersignale können an der Primärinduktivität des Übertragers addiert werden.

Der Übertrager ist gemäß einem besonderen Aspekt der vorliegenden Erfindung durch eine Spulenanordnung gebildet. Die Spulenanordnung kann als galvanisch getrenntes Spulenpaar, oder auch als Spule mit Anzapfung ausgeführt sein. Die Signalabgriffseinrichtung ist vorzugsweise als hochohmiger Komparator ausgebildet. Zwischen dem Übertrager und dem Mikrokontroller, oder auch direkt zwischen dem Serienschwingkreis und dem Mikrokontroller kann ein der Spannungserhöhung dienender Level-Shifter vorgesehen sein.

Der Parallelschwingkreis umfasst vorzugsweise im Empfangsbetrieb eine erste Induktivität, die Bestandteil des Übertragers ist und eine zweite in Serie angekoppelte zweite Induktivität.

Der Übertrager ist vorzugsweise an einen Mikrocontroller, oder an einen Level-Shifter über einen ersten Port und einen zweiten Port angekoppelt. Die Ankoppelung ist vorzugsweise unter Zwischenschaltung von Kondensatoren bewerkstelligt.

Der Mikrocontroller ist vorzugsweise derart ausgebildet und konfiguriert, dass dieser ein an der Signalabgriffseinrichtung anliegendes Ereignis auf die Erfüllung vorgegebener Kriterien, insbesondere Informationsinhalte überprüft.

Der Mikrocontroller ist weiterhin vorzugsweise derart ausgebildet und konfiguriert, dass dieser auf Grundlage von Informationsinhalten die während des Empfangsmodus empfangen werden eine Abstimmung, z.B. Verschlüsselung des Informationsinhalts des auszusendenden Signal durchführt.

Die Schaltung kann in eine scheckkartenartige Struktur eingebunden sein. Die Elektroden der Kondensatoreinrichtung können hierauf relativ großflächig ausgebildet sein. Typischerweise liegt die Fläche der Elektroden der als Signalschnittstelle fungierenden Kondensatoreinrichtung, im Bereich von 3 bis 28 cm². Die Kondensatoreinrichtung kann so ausgebildet sein, dass diese ein möglichst großes Streufeld erzeugt. Die Elektrodenflächen können hierzu flächig versetzt oder auch ungleichflächig ausgebildet sein. Die Elektrodenflächen sind zur Umgebung hin hochohmig isoliert.

Die Schaltung kann mit Vorteil auch in eine Schlüsseleinrichtung, insbesondere einen Schlüsselkopf eingebunden sein.

Weiterhin ist es auch möglich, die Schaltungseinrichtung in einen Gebrauchs-oder Wertgegenstand, z.B. eine Palmtop oder ein Mobiltelfon zu integrieren.

Die Erfindung erfasst auch eine für den Dialog mit einer vorstehend beschriebenen, anwenderseitig zu führenden Schaltung vorgesehene Dialogeinrichtung zur Abwicklung eines entsprechenden Datentransfers. Diese Dialogeinrichtung kann Teil eines komplexeren Systems, beispielsweise Bestandteil eines "intelligenten" Bordnetzes eines Kraftfahrzeuges bilden.

Diese Dialogeinrichtung kann so ausgebildet sein, dass diese intern den im Rahmen eines zur Schaltungseinrichtung gerichteten Signaltransfers verwendeten Träger bei der Verarbeitung eines seitens der Schaltungseinrichtung zur Dialogeinrichtung hin emittierten Signales berücksichtigt, so dass dieser nicht aus dem empfangenen Signal extrahiert werden muss, oder auch zusätzlichen Verifikationszwecken zur Verfügung steht.

Die Dialogeinrichtung kann einen betriebsrelevanten Teil eines fahrzeugseitigen Bordnetzes bilden, so dass beispielsweise nur nach Übertragung bestimmter, seitens der anwenderseitigen Schaltung generierter, verschlüsselter Signale bestimmte Funktionen eintreten, z.B. Änderung des Verriegelungszustandes einer Fahrzeugtüre, starten eines Motors.

Die Dialogeinrichtung kann auch Teil eines fahrzeugseitigen Systems zur nutzerindividuellen Abstimmung von Fahrzeugeinrichtungen, z.B. Sitzen, Spiegeln, Lenkradhöhe, Automatik-Temperatur- Routenplanungs und/oder Audioeinrichtungen bilden. Entsprechende Stellzustände können nach Maßgabe von Daten herbeigeführt werden die aus der anwenderseitig zu führenden, mobilen, beispielsweise scheckkartenartigen Schaltungseinrichtung abgesendet werden. Es ist auch möglich, über die seitens der anwenderseitig zu führenden Schaltungseinrichtung abgesendeten Signale nur eine Anwenderspezifikation vorzunehmen, wobei weitere Informationen für geforderte Stellzustände auf Grundlage dieser Anwenderspezifikation anderweitig bezogen werden können.

Ein besonderer Clou der erfindungsgemäßen Schaltungsanordnung besteht in der Möglichkeit über eine passive Konfiguration in Verbindung mit der Portumschaltung eine einfache funktionale Umschaltung vom Empfangsbetrieb mittels eines hochohmigen Parallelschwingkreises aus L2, L3 und C4 auf Sendebetrieb durch einen Serienschwingkreis aus L3 und C4 zu realisieren. Im Sendefall hat der Übertrager aus L1, L2 nur die Funktion einer Spannungserhöhung, während er im Empfangsbetrieb mit der Induktivität L2 auch Teil des Parallelschwingkreises ist. Dadurch, dass im Empfangsbetrieb die Resonanzfrequenz des Parallelschwingkreises niedriger ist als beim Serienschwingkreis im Sendefall, lässt sich auch vorteilhaft in beiden Richtungen der bidirektionalen Übertragung mit zwei unterschiedlichen Frequenzen arbeiten, was wiederum günstig für das Übersprech- verhalten zwischen Sender und Empfänger bei der Gegenstation ist.

Ein weiter wichtiger Gesichtpunkt bei der Anordnung ist die Möglichkeit, bei QPSK die beiden erforderlichen orthogonalen Trägersignale in einfacher Weise an der Primärinduktivität des Übertragers zu addieren.

Unter der Angabe *quasi-elektrostatische Wechselwirkungseffek-*te sind im vorliegenden Kontext feldelektrische Wechselwirkungseffekte zu verstehen die durch elektrische Felder verursacht sind deren Verhalten im wesentlichen noch dem Verhalten von statischen Feldern entspricht. Derartige *quasi-elektrostatische Wechselwirkungseffekte* treten insbesondere bei Elektroden mit einer Elektrodenfläche im Bereich von 2 bis 25 cm² wenn die Frequenz der an diesen Elektrodenflächen angelegten Spannung noch unterhalb einer diffusen Grenze im Bereich von 1 bis 1,5 MHz liegt.

Gemäß einem weiteren Aspekt der vorliegenden Erfindung wird auch ein Verfahren zur Durchführung eines Signaltransfer über einen belebten Körper auf Grundlage kapazitiver Wechselwirkungseffekte geschaffen, bei welchem senderseitig ein zu übertragendes Signal nach Maßgabe senderseitig anliegender Informationsinhalte generiert und durch eine Elektrodeneinrichtung kapazitiv in den Körper eingekoppelt wird, wobei das Signal derart generiert wird, dass dieses durch Pausenabschnitte voneinander getrennte Datensequenzen umfasst, wobei die Informationsinhalte durch Modulation eines Trägers innerhalb der jeweiligen Datensequenz in den Körper eingekoppelt werden.

Dadurch wird es auf vorteilhafte Weise möglich, den zur Übertragung des Informationsinhalts erforderlichen Leistungsbedarf zu verringern, wobei innerhalb der Datensequenzen der Informationsinhalt in einem vorteilhaft auf das Übertragungsverhalten des Anwenders abgestimmten Hochfrequenzbereich übertragen werden kann.

Vorzugsweise ist das zeitliche Verhältnis der Datensequenzlänge zur Zeitdauer des Pausenabschnitts kleiner als 0,05, insbesondere kleiner als 0,01.

Es ist in vorteilhafter Weise möglich, das zeitliche Verhältnis der Datensequenzlänge zur Zeitdauer des Pausenabschnitts in Abhängigkeit von der zu übertragenden Informationsmenge abzustimmen.

Die Informationsinhalte werden gemäß einem besonderen Aspekt der vorliegenden Erfindung innerhalb der Datensequenzen durch Modulation des Trägers nach Maßgabe eines QPSK-Verfahrens in den Körper eingekoppelt.

Es ist auch möglich, zur Signaleinkoppelung mehrere, vorzugsweise drei diskrete Elektrodeneinrichtungen vorzusehen. Die an die erste Elektrodeneinrichtung angelegte Spannung kann hierbei die Inphasenkomponente des modulierten Trägers darstellen. Die an der zweiten Elektrodeneinrichtung anliegende Spannung entspricht in ihrem zeitlichen Verlauf der Quadraturkomponente des modulierten Trägers. Die an der dritten Elektrodeneinrichtung anliegende Spannung entspricht in ihrem zeitlichen Verlauf dem unmodulierten Träger.

Die Informationsinhalte können alternativ zu der vorangehend genannten Variante mit drei diskreten Elektrodeneinrichtungen auch über eine gemeinsame Einkoppelungselektrodeneinrichtung in den Körper eingekoppelt werden. Vorzugsweise liegt an dieser gemeinsamen Einkoppelungselektrodeneinrichtung neben der Inphasenkomponente und der Quadraturkomponente auch der Träger an.

Vorzugsweise wird die Trägerfrequenz auf einen Wert festgelegt, der eine hohe Übertragungsqualität bei den mit statistisch hoher Wahrscheinlichkeit anzutreffenden Übertragungseigenschaften eines typischen Anwenders liefert. Weiterhin ist die Frequenz des Träger vorzugsweise derart abgestimmt, dass diese einen möglichst großen Abstand zu den im jeweiligen Anwendungsfall auftretenden Störfrequenzen hat.

Es ist möglich, das Sendesystem so zu konfigurieren, dass die Trägerfrequenz auf die Übertragungseigenschaften des Anwenders abgestimmt wird.

Vorzugsweise liegt die Trägerfrequenz im Bereich von 100 kHz bis 500 kHz.

Die eingangs angegebene Aufgabe wird gemäß einem weiteren Aspekt der vorliegenden Erfindung auch gelöst durch eine Sendereinrichtung zur Einkoppelung eines Signals in eine Person bzw. Anwender auf Grundlage des vorangehend angegebenen Verfahrens

Diese Sendeeinrichtung weist vorzugsweise wenigstens eine Elektrodeneinrichtung auf, an welcher die Inphasenkomponenete, die Quadraturkomponente und vorzugsweise auch der Träger eines durch QPSK-Modulation generierten Signals anliegt.

Die Sendeeinrichtung kann auch drei, der Quadraturkomponenete, der Inphasenkomponente und dem Träger jeweils zugeordnete Elektrodeneinrichtungen aufweisen.

Die Sendeeinrichtung ist vorzugsweise einschließlich ihrer Elektrodeneinrichtungen in einen kartenartigen Grundkörper oder einen am Körper oder in der Kleidung / Tasche eines Anwenders oder anderweitig an dem, oder durch den Anwender tragbaren Artikel (Uhr, Mobilphone, PDA; (wearable items)) integriert.

Die Sendeeinrichtung ist vorzugsweise mit einer Spannungsversorgungseinheit, beispielsweise in Form einer Batterie (Flachbatterie) und/oder eines Kondensators (z.B. Gold Cap), und/oder Solarzelle versehen.

Die Erfindung richtet sich auch auf eine Empfangseinrichtung zum Empfang eines Signals, das nach Maßgabe des vorangehend beschriebenen Modulationsverfahrens generiert, oder durch die vorangehend beschriebenen Sendeeinrichtung in eine Person/Anwender eingekoppelt wurde.

Weitere Einzelheiten und Merkmale der Erfindung ergeben sich aus der nachfolgenden Beschreibung in Verbindung mit der Zeichnung. Es zeigt:
- **Figur 1**: eine Schaltungsskizze einer bevorzugten Ausführungsform der erfindungsgemäßen, unter Einschluss eines Mikrocontrollers gebildeten, für den Halbduplextransfer vorgesehenen elektronischen Schaltung;
- **Figur 2**: eine Skizze zur Illustration der Signalübertragung auf Grundlage der QPSK-Modulation;
- **Figur 3**: eine Ersatzschaltung des Körpperwiderstandes;
- **Figur 4**: ein Übertragungsmodell des Körpers;
- **Figur 5**: ein Ersatzschaltbild für ein Körperübertragungssystem;
- **Figur 6**: eine Schaltungsskizze einer zweiten besonders vorteilhaften Ausführungsform einer erfindungsgemäßen, unter Einschluss eines Mikrocontrollers gebildeten, für den Halbduplexdatentransfer vorgesehenen elektronischen Schaltung mit einer dem Empfangssignal Eingangsport des Mikrocontrollers vorgelagerten Wake-up Schaltung die der Signalverstärkung und der Signallevelbegrenzung dient;
- **Figur 7**: eine Schaltungsskizze zur Veranschaulichung weiterer Maßnahmen zur Erhöhung der Sendeleistung des erfindungsgemäßen Schaltungskonzeptes.

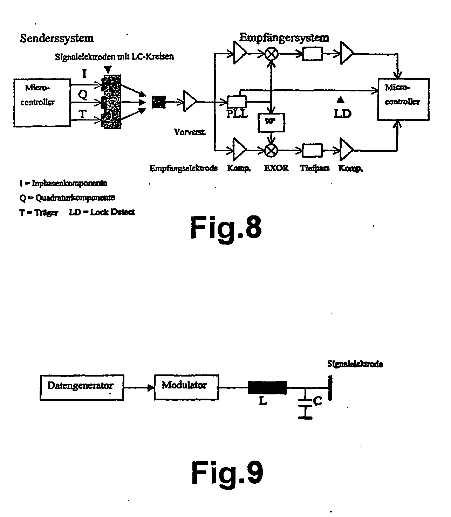

- **Figur 8**: die Struktur eines weiteren Senders und Empfängers
- **Figur 9**: eine weitere Abbildung zur Struktur des Senders

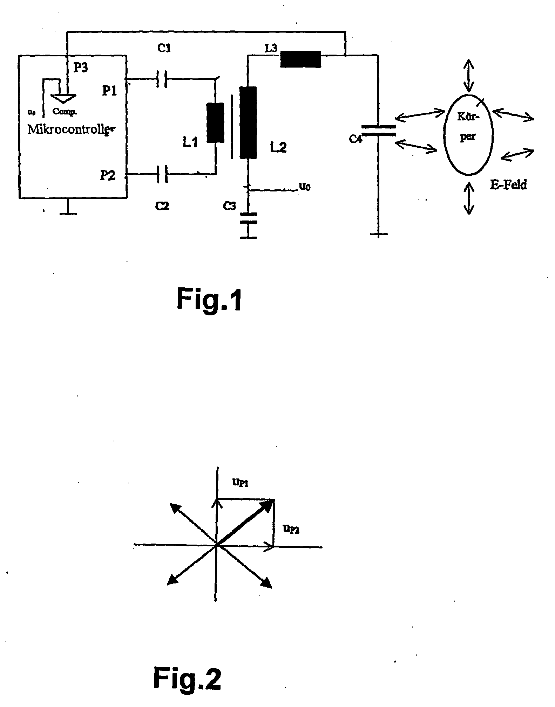

Die in Figur 1 gezeigte Anordnung dient der bidirektionalen Übertragung von Datensignalen über den Körper mittels eines elektrischen Feldes im Dialog mit einer hier nicht näher gezeigten und mit einer Sende- und einer Empfangselektrodeneinrichtung ausgestatteten Dialogstation. Hierzu wird erfindungsgemäß sowohl eine Sende- als auch Empfangsfunktion durch diese Schaltung am selben Ort, an dem das elektrische Feld auf den Körper wirkt, gewährleistet.

### 1. Sendefunktion

Im Fall der Sendefunktion erzeugt der Mikrocontroller an Port 1 (P1) und an Port 2 (P2) Signale, mit denen verschiedene Modulationsverfahren wie ASK, FSK, PSK oder QPSK zur trägerfrequenten Datenübertragung realisiert werden können.

Bei ASK, FSK und PSK wird vorzugsweise lediglich an P1 ein Träger erzeugt, dessen Amplitude, Frequenz oder Phase durch das Datensignal verändert wird. Bei QPSK kann ein um 90° verschobener zweiter Träger erzeugt werden. Dies wird dadurch erreicht, dass ein um 270 ° gegenüber dem an P1 erzeugten Träger phasenverschobenes Signal an P2 generiert wird, das nach Auskopplung über die Kondensatoren C1 und C2 dann zu einer Spannungsdifferenz uP1 - uP2 an der Primärinduktivität führt. Dadurch ergibt sich entsprechend der Darstellung von Figur 2 in der komplexen Ebene eine vektorielle Addition der beiden Trägerkomponenten, mit der sich dann alle vier bei QPSK erforderlichen Phasenlagen erzeugen lassen.

Die genante Spannungsdifferenz liegt an der Primärseite eines Übertragers mit der Primärinduktivität L1 an und speist sekundärseitig einen Serienschwingkreis, der aus L3 und C4 gebildet wird. Der in diesem Kreis fließende Strom erzeugt dann bei einer ersten Resonanzfrequenz f01 = (2 n L3 C4)^{-1/2} eine hohe Spannung an dem durch die Signalelektroden gebildeten Kondensator C4. Durch diese Spannung wird das für die Signalübertragung wirksame elektrische Feld (Nahfeld) erzeugt.

Der Kondensator C3, der für die Empfangsfunktion benötigt wird, bildet einen wechselstrommäßigen Kurzschluss für die Trägerfrequenz. Der in den Anordnung verwendete Übertrager wirkt bei allen der möglichen Modulationsverfahren vorteilhaft auch als Spannungsverstärker durch Wahl eines geeigneten Übersetzungsverhältnisses L2/L1. Der Übertrager kann vorteilhaft über einen hier nicht näher dargestellten Level-Shifter mit dem Mikrokontroller gekoppelt sein.

Die für eine bestimmte Datenübertragungsgeschwindigkeit erforderliche Bandbreite der Anordnung ist vorzugsweise bestimmt durch die an P1 und P2 wirksamen Quellimpedanzen und die Gütefaktoren der Induktivitäten, die sich z.B. mittels der verwendeten Drahtstärken und des Kernmaterials einstellen lassen.

### 2. Empfangsfunktion

Die in Figur 1 dargestellte Anordnung gelangt in einen, einen Empfangsmodus darstellenden Zustand indem die nicht mehr aktiven Ports P1 und P2 in einen hochohmigen Zustand geschaltet werden, wodurch auf der Primärseite des Übertragers ein Leerlauf entsteht und dadurch die Induktivität L1 praktisch unwirksam wird. Wirkt nun über den Körper des Anwenders, oder in dessen näherer Umgebung ein elektrisches Wechselfeld rückwärts von einer anderen Sendestation auf die Elektroden des Kondensators C4, entsteht durch Influenz eine Empfangsspannung, die mittels eines durch diese Anordnung als Bandpass realisierten Filters von den übrigen ebenfalls über den Körper wirkenden Störspannungen weitgehend ausgefiltert wird. Dieses Filter wird aus den beiden Induktivitäten L2 und L3 in Verbindung mit Kondensator C4 als Parallelresonanzkreis gebildet, an dem die Empfangsspannung abgegriffen und einem dritten hochohmigen Port P3 des Mikrokontrollers zugeführt wird, an dem intern die Funktion eines Komparators während der Empfangsphase aktiviert ist. Über den Kondensator C3 wird eine Gleichspannung u0 angelegt, die der internen Referenzspannung des Comparators entspricht.

Empfängt C4 ein rückwärts gerichtetes Signal, so wird dieses nun mittels des Parallel-schwingkreises und des Comparators detektiert und im Mikrocontroller weiterverarbeitet, wodurch dann eine bidirektionale Übertragung möglich ist. Das hiermit von einer zweiten Sendestation abgestrahlte und von der vorliegenden Schaltung empfangene Signal kann auch dazu verwendet werden, dass aus Gründen der Stromeinsparung der Mikrocontroller aus einem Sleep-Modus aufgeweckt wird, um dann die Sendefunktion zu aktivieren, während der ein höherer Stromverbrauch erforderlich. Dieser Gesichtspunkt ist insbesondere bei Batteriebetrieb der Anordnung besonders wichtig.

Ein weiterer großer Vorteil der erfindungsgemäßen Anordnung von Figur 1 ist die Möglichkeit, hiermit zwei Stationen zu synchronisieren, was insbesondere bei Modula-tionsverfahren mit PSK und QPSK erforderlich ist, da hierbei Sender und Empfänger mit zueinander synchronen Trägern arbeiten müssen. Dazu wird von der Gegenstation ein Träger gesendet, der auf eine Resonanzfrequenz f02 des aus L2, L3 und C4 gebildeten Parallelschwingkreises in der Empfangsfunktion abgestimmt ist, damit eine maximale Empfangsspannung an C4 entsteht. Diese Frequenz ist wegen der nunmehr höheren Induktivität L2 + L3 niedriger als im Fall der Sendefunktion. Vorzugsweise wird diese Frequenz z. B. durch geeignete Dimensionierung von L2 so gewählt, dass sie halb so groß wie die erste im Fall des Sendens gewählte Resonanzfrequenz f01 . Mittels des Mikrocontrollers lässt sich dann in einfacher Weise durch Frequenzverdopplung für den Fall des Sendens ein Gleichlauf der beiden Sendestationen erreichen. Die erste Station sendet also mit f02 = f01/2 und empfängt mit f01 , während die Gegenstation mit f01 sendet und f02 empfängt.

Insgesamt lassen sich mit der erfindungsgemäßen Anordnung insbesondere folgende Effekte bei der Datenübertragung über den Körper erreichen:
1. Durch Einsatz eines Übertragers ergibt sich eine Erhöhung des abgestrahlten elektrischen Feldes. Hierdurch ergibt sich eine höhere Resistenz gegenüber Störsignalen auf der Empfangsseite.
2. Es besteht die Möglichkeit der Stromeinsparung bei Batteriebetrieb, da die anwenderseitig zu tragende Komponente erst durch ein Aufwecksignal für den Mikrocontroller aktiviert wird und solange allenfalls ein äußerst geringer Leistungsbezug des Mikrocontrollers erfolgt. Dieser Vorteil ist besonders gewichtig im Falle der Nutzung der Erfindung mit einer sog. *smart card,* die am Körper getragen wird.
3. Es besteht die Möglichkeit zur Synchronisierung zweier Stationen bei bidirektionaler Datenübertragung mittels PSK oder QPSK- Modulation zur erforderlichen Synchrondemodulation beim Empfang.

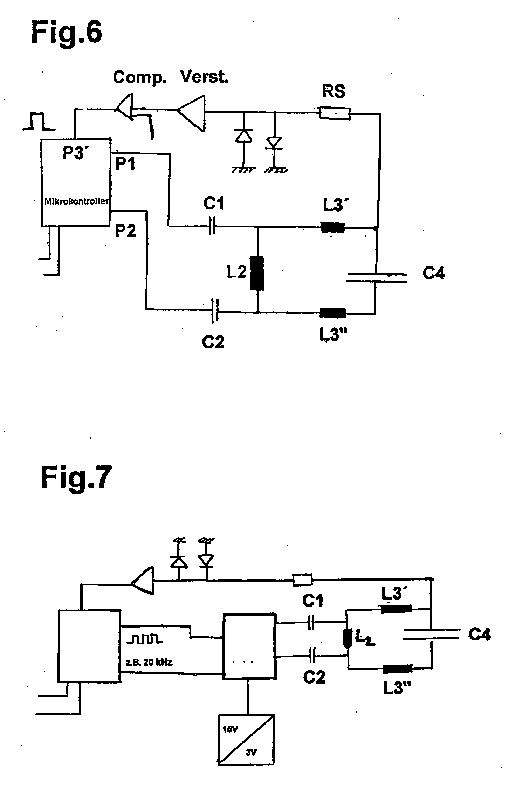

Für die Schaltungen nach den Figuren 6 und 7 gelten die Ausführungen zu Figur 1 weitgehend sinngemäß. Die Anbindung des Serienschwingkreises erfolgt bei den Varianten nach den Figuren 6 und 7 jedoch ohne Übertrager.

Die Schaltung gemäß Figur 6 unterscheidet sich von der Variante nach Figur 1 weiterhin, insbesondere im Hinblick auf ein, dem Empfangssignalport P3' des Mikrokontrollers vorgelagertes Empfanssignalsystem. Dieses kann beispielsweise aus einem Komparator, einem Verstärker mit Komparator oder einem Wake-Up Empfänger bestehen. Zur Sicherung des Empfangssignalsystems ist vorzugsweise eine Sicherungsschaltung vorgesehen, die beispielsweise aus einem Serienwiderstand und aus antiparallel geschalteten Dioden bestehet und vor dem Eingang des Empfangssystems angeordnet ist. Das Empfangssignalsystem kann jedoch auch wie bei der Variante nach Figur 1 weiterhin als Bestandteil des Mikrocontrollers ausgeführt sein.

Bei der Schaltung gemäß Figur 7 erfolgt im Rahmen des Sendebetriebs die Ansteuerung des Serienschwingkreises unter Einbindung eines Step-up Converters.

An den beiden Ausgängen des µC ( Fig. 6 bzw. low side Converters (Fig.7) stehen vorzugsweise jeweils zwei Trägersignale an, deren Phasenlagen abhängig vom gewählten Modulationsverfahren unterschiedlich sein können. Es gelten folgende Zuordnungen der Phasenlagen:
Bei FSK ( Frequency Shift Keying) und PSK ( Phase Shift Keying): 180 °
Bei QPSK ( Quadrature PSK) : 90 °

Die erfindungsgemäßen Schaltungseinrichtungen können beispielsweise als anwenderseitig zu führende Komponenten eines Keyless-Acces Systems Anwendung finden. Ein entsprechendes Beispiel für den Automotive-Bereich wird nachfolgend beschrieben.

Das beispielhaft beschriebenen System umfasst einen fahrzeugseitig vorgesehenen, in das Bordnetz integrierten Systemabschnitt und ggf. mehrere jeweils anwenderseitig zu führende mobile Access-Schaltungen.

Die mobilen Access-Schaltungen sind beispielhaft in einen scheckkartenartigen Korpus, in einen Fahrzeugschlüssel, oder ggf. auch anderweitigen anwenderseitig zu führenden Gegenstand z.B. in ein Mobiltelefon integriert.

Nähert sich ein mit einer mobilen Acces-Schaltung ausgestatteter Anwender einem Kraftfahrzeug, so kann ein von dem fahrzeugseitigen Systemabschnitt ausgesendetes Wecksignal über den Kondensator C4 Eingang in den seitens der mobilen Acces-Schaltung vorgesehenen Parallelschwingkreis finden. Das Wecksignal gelangt hierbei an den hochohmigen Komparator-Port P3. Das insoweit an dem Mikrokontroller anliegende Signal kann einer signalverarbeitenden Betrachtung zugrunde gelegt werden. Die signalverarbeitende Betrachtung kann durch entsprechende Konfiguration des Mikrokontrollers festgelegt werden. Bei Erfüllung bestimmter Kriterien des an P3 anliegenden Ereignisses kann der Mikrokontroller den Informationsinhalt eines Ausgangssignales bestimmen und durch entsprechende Modualtion der an dem jeweiligen Sende-Port P1, P3 in den Übertrager (Spulenanordnung L1, L2) ein Signal einkoppeln. Im Rahmen dieser Signaleinkoppelung entsteht an dem Kondensator C4 ein nach Maßgabe des eingekoppelten Signales wechselndes Feld. Die durch dieses wechselnde Feld verursachten Streueffekte können durch das fahrzeugseitige Empfangssystem verarbeitet und ebenfalls einer signalverarbeitenden Betrachtung, beispielsweise Auswertung des Informationsinhaltes zugrundegelegt werden.

Es ist möglich, die mobile Access-Schaltung so aufzubauen, dass das durch diese phasenweise emittierte und einen durch Mikrokontroler bestimmten Informationsinhalt tragende Signal in einem bestimmten zeitlichen Verhältnis zu dem empfangenen Weckruf liegt. Es ist möglich, die Anordnung so zu konfigurieren, dass erst nach Eintreffen mehrer als zulässig, oder geeignet klassifizierter Wecksignale oder Wecksignalsequenzen die mobile Access-Schaltung eine Signalemission veranlasst. Die Wecksignalsequenzen können zur Informationsverschlüsselung auf Seiten der mobilen Access-Schaltung sowie auch zur Signalsynchronisation herangezogen werden.

Sobald im Bereich des fahrzeugseitigen Systemabschnitts Signale empfangen werden, die seitens der mobilen Access-Schaltung ausgesendet wurden, können nach Auswertung derselben vorgegebene Abläufe, z.B. eine Änderung des Verriegelungszustandes, oder eine Funktionsfreigabe herbeigeführt werden.

Die auf Grundlage des erfindungsgemäßen Verfahrens, sowie unter Verwendung der erfindungsgemäßen Kernschaltung transferierbaren Signale können auch zur Abwicklung zahlreicher anderweitiger Vorgänge herangezogen werden. Die erfindungsgemäße Schaltung eignet sich hierbei in besonderem Maße zur Bereithaltung von Informationen und Übermittlung derselben nach Aufruf durch ein als zulässig klassifizierbares Wecksignal.

Die Erfindung kann auch dazu verwendet werden, zwischen mehreren anwenderseitig getragenen mobilen Schaltungen einen Datentransfer abzuwickeln. Hierdurch lassen sich insbesondere Systeme zur Erkennung des Ausstattungszustandes eines Anwenders, sowie System zur Präsenzanalyse von Objekten realisieren. Es ist möglich, den Mikrokontroller so zu konfigurieren, dass innerhalb eines durch mehrer mobile Schaltungseinrichtungen körpernah etablierten Netzwerkes eine Selbstkonfiguration, insbesondere Abstimmung des Dialogprotokolls erfolgt.

Das erfindungsgemäß vorgeschlagene lineare Modulationserfahren QPSK (Quadrature Phase Shift Keying)-Modulation ermöglicht im vorliegenden Fall eine Datenübertragung über den Körper mit folgenden Vorteilen:
1. Höchste Bandbreiteneffizienz ( Bitrate/ pro Hz Bandbreite)
2. BER-Wert (Bit/Error Rate) bei vergleichbarem S/N wesentlich geringer
   z.B. bei S/N= 10 dB um ca. Faktor 100 [9]
3. Hierdurch Möglichkeit , den Strombedarf des Senders zu reduzieren

Ein wesentlicher Vorteil der vorangehend beschriebenen Anwendungsform der QPSK-Modulation besteht im vorliegenden Fall darin, dass empfangsseitig ein synchroner Träger zur Demodulation verfügbar ist, der aus dem ankommenden Signal ohne Bedarf nach einer schaltungstechnisch aufwendigen Costasschleife regeneriert werden. Durch das erfindungsgemäße Konzept wird es möglich, den Informationstransfer sowohl senderseitig, als auch empfängerseitig durch kostengünstig realisierbare und insbesondere senderseitig nur einen geringen Leistungsbezug verursachende Schaltungsstrukturen abzuwickeln. Dies ist ein für die praktische Anwendung sehr wichtiger Gesichtspunkt , insbesondere dann, wenn der Sender auf einer flachen " smart card " in Kreditkarten-größe realisiert wird. Je geringer die Anzahl der für die Funktion des Datengenerators und des Modulators notwendigen Bauteile ist, umso geringer sind der Strombedarf und die Herstellungskosten.

Das vorgeschlagene Konzept wird anhand von Figur 4 näher erläutert.

Die Inphasen-, die Quadraturkomponente sowie der Träger können, wie dargestellt auf eine gemeinsame Elektrodeneinrichtung gespeist werden. Um die Struktur des Senders besonders einfach zu halten, werden die für die QPSK notwendigen Inphasen-und Quadraturkomponenten des Trägers getrennt mittels eines Microcontrollers erzeugt und direkt über ein LC-Netzwerk auf die gemeinsame, oder - alternativ hierzu- auf getrennte Signalelektroden gespeist. Als weiteres Signal wird der ( unmodulierte) Träger jener gemeinsamen - oder einer dritten Signalelektrode zugeführt. Die Addition der beiden Signalkomponenten sowie des Trägers erfolgt bei Verwendung getrennter Elektroden, im Körper des Anwenders, spätestens am Eingang der Signalelektrode des Vorverstärkers durch die beschriebene kapazitive Kopplung.

Durch die beschriebenen Maßnahmen wird einmal die Struktur des Senders besonders einfach und zum anderen erhält man empfangsseitig den notwendigen Träger für die Synchrondemodulation der I-und Q-Komponenten, die vorzugsweise über zwei Komparatoren und Stufen mit jeweils einer EXOR-Funktion und anschließender Tiefpassfilterung realisiert wird. Die EXOR-Funktionen liefern dabei die für die Synchrondemodulation notwendige Multiplikation mit den beiden orthogonalen Trägern, die mittels einer PLL und einer 90° Phasenverschiebung gewonnen werden können.

Nach Pegelwandlung mit zwei weiteren Komparatoren werden die übertragenen Datensignale der I-und Q-Komponenten in einem Microcontroller decodiert. Vorzugsweise sperrt ein von der PLL geliefertes Lock-Detect-Signal bei Unterbrechung der Übertragung stromsparend den gesamten Decodierprozess.

Das QPSK-System ist vorzugsweise so konzipiert, dass empfangsseitig bei Verwendung moderner Microcontroller, alle notwendigen analogen und digitalen Funktionen zur Decodierung der Daten in einem einzigen Controller -IC realisiert werden können (eventuell auch mit DSP), wodurch der Hardwareaufwand und die Produktionskosten auf ein Minimum sinken. Der für den Strombedarf des Senders wesentliche Vorteil der QPSK-Methode gegenüber herkömmlichen Modulationsverfahren liegt darin, dass bei vergleichbarer Trägeramplitude die über das LC-Netzwerk übertragbare Bitrate bei hoher Störsicherheit deutlich höher sein kann, und dadurch bei einem gepulsten Betrieb die Strombelastung der Batterie gering ist.

Das erfindungsgemäße System zeichnet sich durch eine hohe Störsicherheit für die Übertragung von Daten über den Körper mit gleichzeitig kostengünstiger Herstellung sowohl des Senders als auch des Empfängers in einem Produktionsprozess aus.

Da es bei der Datenübertragung über den Körper zu starken Störeinflüssen entweder über den als Antenne wirkendenden Körper selbst oder bei Anwendungen in Arbeitsmaschinen durch Eigenstörungen kommen kann, erfolgt vorzugsweise neben der Wahl eines störunempfindlichen Modulationsverfahrens auch eine zusätzliche Sicherung durch eine Kanalcodierung bei kritischen Anwendungsfällen.

Im Falle der Körperübertragung wird vorzugsweise ein fehlerkorrigierendes Verfahren gewählt, so dass auf einen, (bei fehlererkennenden Verfahren erforderlichen) Rückkanal verzichtet werden kann. Das Codierungsverfahren wird vorzugsweise auf den Charakter etwaiger zu erwartender Störungen abgestimmt.

In vorteilhafter Weise wird im Übertragungsprotokoll von vornherein zunächst eine Coderedundanz von beispielsweise 50% vorgesehen, die dann aufgrund der in praktischen Untersuchungen gewonnenen Erkenntnisse mit einer angepassten Codierung auch verringert werden kann. Als erster Schritt zur Einführung einer Kanalcodierung mit Fehlerkorrektur kann eine Blocksicherung mit Paritätsprüfung ( VRC/LRC-Codierung) verwendet werden, wodurch sich die Codewortlänge verdoppelt. Hierdurch können mit einem sehr einfachen Algorithmus Einfachfehler im Codewort korrigiert werden, wodurch die Restfehlerwahrscheinlichkeit für eine Bitverfälschung um ca. 10³ verbessert wird.

Es ist auch möglich, Kanalcodierungen, wie z.B. ein RS (Reed-Solomon) - Code zu implementieren, mit dem insbesondere kurzzeitig auftretende Störungen (Burstfehler) wirksam korrigierbar sind .

Durch das erfindungsgemäße Verfahren, bei welchem der modulierte Träger im Burstbetrieb gesendet wird, wird es möglich, auch mit kompakten Batterieeinrichtungen eine relativ lange Betriebsdauer von ca. 1 bis 2 Jahren einer batteriebetriebenen Sendereinrichtung zu erreichen. Der Energieverbrauch wird umso geringer, je kürzer die verwendete Codewortlänge, bzw. je höher die erreichbare Bitrate ist, für die ein Wert von ca. 20kbit/s vorgeschlagen wird. Bei einer Burstwiederholdauer von 200 ms lassen sich dann bei einem Tastverhältnis von 1:100 Codewörter mit 40 bit ( inclusive Kanal-codierung !) übertragen.

Der Sender kann insbesondere auf einer flachen Karte ( "smart card ") in der Größe einer Kreditkarte aufgebaut sein. Außer dem bereits diskutierten Batterieproblem ist besonders die genaue Struktur der Signalelektroden und des LC- Netzwerkes wichtig, entsprechend dem in Figur 5 dargestellten Grundprinzip

Um hier Bauteiltoleranzen besonders der Induktivität ( typisch + /- 5%) hinreichend Rechnung zu tragen ist es in vorteilhafter Weise möglich, diese Grundstruktur derart zu modifizieren, dass bei gleich großer Sendespannung eine höhere Bandbreite des LC-Netzwerkes ohne Verringerung des Gütewertes erreicht wird, um den Einfluss dieser Toleranzen zu vermindern. Die Festlegung der Struktur und Größe der Signalelektroden kann empirisch in Verbindung mit Untersuchungen bezüglich einer optimalen Ein- und Auskoppelung der Signale über den Körper erfolgen, da die von den Elektroden erzeugte Verteilung des elektrischen Feldes wesentlich die Signalamplitude am Empfänger bestimmt. Bei körpernah zu tragenden Karten, z.B. Identifikations- oder Kreditkarten sowie Karten für keyless-access Systeme, erstrecken sich die Elektroden vorzugsweise über den überwiegenden Teil einer Hauptfläche des Kartenelementes.

## Patentansprüche

1. Verfahren zur Signalübertragung auf Grundlage quasi-elektrostatischer Wechselwirkungseffekte unter Verwendung einer anwenderseitig zu führenden Schaltungseinrichtung, bei welchem als Signalschnittstelle eine Kondensatoreinrichtung verwendet wird, die in einen Schwingkreis eingebunden ist,
**dadurch gekennzeichnet, dass** während des Betriebs der Schaltungseinrichtung in einem Empfangsmodus der Schwingkreis als Parallel-Schwingkreis betrieben wird und der Schwingkreis in einem Sendemodus als Serienschwingkreis betrieben wird.

2. Verfahren nach Anspruch 1, **dadurch gekennzeichnet, dass** im Rahmen des Empfangsmodus der Schwingkreis in einen Zustand hochohmiger Ankoppelung an eine Signalabgriffseinrichtung ( z.B. Komparator) versetzt ist.

3. Verfahren nach Anspruch 1 oder 2, **dadurch gekennzeichnet, dass** die Anbindung des Serienschwingkreises an den Mikrokontroller durch eine als Übertrager fungierende Spulenanordnung bewerkstelligt ist.

4. Verfahren nach wenigstens einem der Ansprüche 1 bis 3, **dadurch gekennzeichnet, dass** der Empfangsmodus und der Sendemodus zueinander zeitversetzt sind.

5. Verfahren nach wenigstens einem der Ansprüche 1 bis 4, **dadurch gekennzeichnet, dass** im Rahmen des Empfangsmodus ein Wecksignal Über die Signalabgriffseinrichtung abgegriffen wird.

6. Verfahren nach wenigstens einem der Ansprüche 1 bis 5, **dadurch gekennzeichnet, dass** das an der Signalabgriffseinrichtung anliegende Signal einen Träger enthält.

7. Verfahren nach wenigstens einem der Ansprüche 1 bis 6, **dadurch gekennzeichnet, dass** das an der Signalabgriffseinrichtung anliegende Signal ein Synchronisations- oder Timer-Signal enthält.

8. Verfahren nach wenigstens einem der Ansprüche 1 bis 7, **dadurch gekennzeichnet, dass** die Schaltungseinrichtung im Rahmen des Sendemodus nach wenigstens einem der nachfolgenden Modulationsverfahren betrieben wird: ASK, FSK, PSK oder QPSK.

9. Verfahren nach wenigstens einem der Ansprüche 1 bis 8 **dadurch gekennzeichnet, dass** der Schwingkreis im Rahmen des Empfangsmodus mit einer anderen Induktivität und damit mit einer anderen Resonanzfrequenz betrieben wird, als im Rahmen des Sendemodus.

10. Verfahren nach wenigstens einem der Ansprüche 1 bis 9, **dadurch gekennzeichnet, dass** das im Rahmen des Sendemodus abgegebene Signal auf Grundlage eines während eines vorangegangenen Empfangsmodus empfangenen Signalinhaltes verschlüsselt oder konditioniert wird.

11. Verfahren nach wenigstens einem der Ansprüche 1 bis 10, **dadurch gekennzeichnet, dass** über einen im Rahmen des Empfangsmodus empfangenen Signalinhalt eine Protokoll-Definition erfolgt,

12. Verfahren nach wenigstens einem der Ansprüche 1 bis 11, **dadurch gekennzeichnet, dass** über einen im Rahmen des Empfangsmodus empfangenen Signalinhalt eine Abstimmung der zeitlichen Lage und/oder der Synchronisation des im Rahmen des Sendemodus an den in den Schwingkreis eingekoppelten Signals erfolgt, zur Vermeidung von Überlagerungen mit weiteren Kommunikationskomponenten.

13. Schaltungseinrichtung zur Abwicklung eines Signaltransfers auf Grundlage quasi-elektrostatischer Wechselwirkungseffekte, mit einer als Signalschnittstelle fungierenden Kondensatoreinrichtung (C), die in einen Schwingkreis eingebunden ist, **dadurch gekennzeichnet, dass** die Schaltungseinrichtung derart konfiguriert ist, dass während des Betriebs der Schaltungseinrichtung in einem Empfangsmodus, der Schwingkreis als Parallel-Schwingkreis geschaltet ist und im Rahmen des Sendemodus als Serienschwingkreis geschaltet ist.

14. Schaltungseinrichtung nach Anspruch 13, **dadurch gekennzeichnet, dass** der Schwingkreis an einen Mikrokontroller angekoppelt ist und die Anbindung des Schwingkreises an den Mikrokontroller im Rahmen des Empfangsmodus durch Ankoppelung an ein hochohmiges Signalabgriffssystem (z.B. Komparator) bewerkstelligt ist.

15. Schaltungseinrichtung nach Anspruch 13 oder 14, **dadurch gekennzeichnet, dass** die Schaltungseinrichtung derart konfiguriert und aufgebaut ist, dass eine funktionale Umschaltung aus einer im Empfangsmodus herrschenden passiven Konfiguration in einen Sendebetrieb im Wege einer Port- oder Impedanzumschaltung bewerkstelligbar ist.

16. Schaltungseinrichtung nach wenigstens einem der Ansprüche 13 bis 15, **dadurch gekennzeichnet, dass** im Rahmen der Port-oder Impedanzumschaltung (P1, P2) ein Parallelschwingkreises aus L2, L3, C4; bzw. L2, L3', L3" und C4 für den Sendebetrieb in einen Serienschwingkreis aus L3 und C4, bzw. L3', L3" und C4 für den insbesondere passiven Empfangsbetrieb konvertier bar ist.

17. Schaltungseinrichtung nach wenigstens einem der Ansprüche 13 bis 15, **dadurch gekennzeichnet, dass** im Sendefall ein Übertrager aus L1, L2 die Funktion einer Spannungserhöhung ausübt, während er im Empfangsbetrieb mit der Induktivität L2 auch Teil des Parallelschwingkreises ist.

18. Schaltungseinrichtung nach wenigstens einem der Ansprüche 13 bis 17, **dadurch gekennzeichnet, dass** im Sendefall ein Level-Shifter die Funktion einer Spannungserhöhung ausübt während er sich im Empfangsbetrieb in einem hochohmigen Zustand befindet, und dass die Umschaltung in den hochohmigen Zustand durch den Mikrokontroller erfolgt, am Ende eines Sendezyklus.

19. Schaltungseinrichtung nach wenigstens einem der Ansprüche 13 bis 18, **dadurch gekennzeichnet, dass** im Empfangsbetrieb die Resonanzfrequenz des Parallelschwingkreises niedriger ist als beim Serienschwingkreis im Sendefall, und/oder dass in beiden Richtungen der bidirektionalen Übertragung mit zwei unterschiedlichen Frequenzen operiert wird.

20. Schaltungseinrichtung nach wenigstens einem der Ansprüche 13 bis 19, **dadurch gekennzeichnet, dass** bei QPSK-Modulation die beiden erforderlichen orthogonalen Trägersignale durch den Mikrokontroller an Port P1 und Port P2 erzeugt werden.

21. Schaltungseinrichtung nach wenigstens einem der Ansprüche 13 bis 20, **dadurch gekennzeichnet, dass** die an Port P1 und P2 ausgegebenen Trägersignale am Serienschwingkreis addiert werden.

22. Schaltungseinrichtung nach wenigstens einem der Ansprüche 13 bis 21, **dadurch gekennzeichnet, dass** der Übertrager durch eine Spulenanordnung gebildet ist.

23. Schaltungseinrichtung nach wenigstens einem der Ansprüche 13 bis 22, **dadurch gekennzeichnet, dass** der Übertrager als galvanisch getrenntes Spulenpaar realisiert ist.

24. Schaltungseinrichtung nach wenigstens einem der Ansprüche 13 bis 23, **dadurch gekennzeichnet, dass** der Übertrager als Spule mit einer Anzapfung realisiert ist.

25. Schaltungseinrichtung nach wenigstens einem der Ansprüche 13 bis 24, **dadurch gekennzeichnet, dass** die Anbindung des Serienschwingkreises an den Mikrokontroller unter Zwischenschaltung eines Level-Shifters erfolgt.

26. Schaltungseinrichtung nach wenigstens einem der Ansprüche 13 bis 25, **dadurch gekennzeichnet, dass** die Anbindung des Serienschwingkreises an den Mikrokontroller über die Ankoppelungskondensatoren (C1, C2) erfolgt.

27. Schaltungseinrichtung nach wenigstens einem der Ansprüche 13 bis 26, **dadurch gekennzeichnet, dass** die Signalabgriffseinrichtung ein Empfangssystem umfasst, das als Komparator oder als Kombination eines Verstärkers und eines Komparators, oder als Wake-up-Empfänger ausgebildet ist.

28. Schaltungseinrichtung nach wenigstens einem der Ansprüche 13 bis 27, **dadurch gekennzeichnet, dass** am Eingang der aktiven Komponenten des Empfangssystems eine Begrenzerschaltung vorgesehen ist, die aus einem Serienwiderstand (RS) und zwei antiparallel geschalteten Dioden besteht.

29. Schaltungseinrichtung nach wenigstens einem der Ansprüche 13 bis 28, **dadurch gekennzeichnet, dass** der Komparator Teil eines Mikrocontrollers bildet.

30. Schaltungseinrichtung nach wenigstens einem der Ansprüche 13 bis 29, **dadurch gekennzeichnet, dass** der Parallelschwingkreis eine erste Induktivität (L2) umfasst, die Bestandteil des Übertragers ist und eine zweite in Serie angekoppelte zweite Induktivität (L3) umfasst.

31. Schaltungseinrichtung nach wenigstens einem der Ansprüche 13 bis 30, **dadurch gekennzeichnet, dass** der Übertrager an einen Mikrocontroller über einen ersten Port und einen zweiten Port angekoppelt ist.

32. Schaltungseinrichtung nach wenigstens einem der Ansprüche 13 bis 31, **dadurch gekennzeichnet, dass** die Ankoppelung unter Zwischenschaltung von Kondensatoren und eines Level-Shifters bewerkstelligt ist.

33. Schaltungseinrichtung nach wenigstens einem der Ansprüche 13 bis 32, **dadurch gekennzeichnet, dass** die Ankoppelung zwischen dem Mikrokontroller und dem Übertrager unter Einbindung eines Level-Shifters (Pegelwandler zur Spannungserhöhung) bewerkstelligt ist.

34. Schaltungseinrichtung nach wenigstens einem der Ansprüche 13 bis 33, **dadurch gekennzeichnet, dass** im Falle einer Konfiguration der Schaltungseinrichtung zur Generierung eines Sendesignals auf Grundlage eines QPSK-Verfahrens jedem der zur Anbindung des Übertragers vorgesehenen Port eine der Spannungserhöhung dienende Schaltung (Level-Shifter) zugeordnet ist.

35. Schaltungseinrichtung nach wenigstens einem der Ansprüche 13 bis 34, **dadurch gekennzeichnet, dass** der Mikrocontroller derart ausgebildet und konfiguriert ist, dass dieser ein an der Signalabgriffseinrichtung anliegendes Ereignis auf die Erfüllung vorgegebener Kriterien, insbesondere Informationsinhalte (z.B. Daten) überprüft.

36. Schaltungseinrichtung nach wenigstens einem der Ansprüche 13 bis 35, **dadurch gekennzeichnet, dass** der Mikrocontroller derart ausgebildet und konfiguriert ist, dass dieser auf Grundlage von Informationsinhalten (z.B. Daten) die während des Empfangsmodus empfangen werden eine Abstimmung (z.B. Verschlüsselung) des Informationsinhalts des auszusendenden Signal durchführt.

37. Schaltungseinrichtung nach wenigstens einem der Ansprüche 13 bis 36, **dadurch gekennzeichnet, dass** diese in eine scheckkartenartige Struktur eingebunden ist.

38. Schaltungseinrichtung nach wenigstens einem der Ansprüche 13 bis 37, **dadurch gekennzeichnet, dass** diese in einen Schlüssel eingebunden ist.

39. Schaltungseinrichtung nach wenigstens einem der Ansprüche 13 bis 38, **dadurch gekennzeichnet, dass** diese in einen Gebrauchsgegenstand, insbesondere eine auswechselbare Komponente desselben (z.B. Akkufach-Deckel) eingebunden ist.

40. Schaltungseinrichtung nach wenigstens einem der Ansprüche 13 bis 39, **dadurch gekennzeichnet, dass** diese in einen Wertgegenstand eingebunden ist.

## Claims

1. Method for transferring signals on the basis of quas - electrostatic interaction effects with the use of a circuit device to be carried by the user, in which a capacitor devi:e which is incorporated in a resonant circuit is used as a signal interface, **characterized in that,** during operation of the circuit device, in a receiving mode the resonant circuit is operated as a parallel resonant circuit and in a transmitting mode the resonant circuit is operated as a series resonant circuit.

2. Method according to claim 1, **characterized in that** _n receiving mode the resonant circuit is put in a state of high_y resistive coupling with a signal-tapping device (e.g. comparator).

3. Method according to claim 1 or 2, **characterized in that** the series resonant circuit is linked to the microcontroller by a coil arrangement acting as a transmitter.

4. Method according to at least one of claims 1 to 3, **characterized in that** the receiving mode and transmitting mode are asynchronous.

5. Method according to at least one of claims 1 to 4, **characterized in that** in receiving mode a wake-up signal is tapped by the signal-tapping device.

6. Method according to at least one of claims 1 to 5, **characterized in that** the signal present at the signal-tapping device contains a carrier.

7. Method according to at least one of claims 1 to 6, **characterized in that** the signal present at the signal-tapping device contains a synchronization or timer signal.

8. Method according to at least one of claims 1 to 7, **characterized in that** in transmitting mode the circuit device .s operated in accordance with at least one of the following modulation methods: ASK, FSK, PSK or QPSK.

9. Method according to at least one of claims 1 to 8, **characterized in that** in receiving mode the resonant circuit is operated with a different inductance and hence with a different resonant frequency than in transmitting mode.

10. Method according to at least one of claims 1 to 9, **characterized in that** the signal released in transmitting mode is coded or conditioned on the basis of a signal content received during a preceding receiving mode.

11. Method according to at least one of claims 1 to 1), **characterized in that** a protocol is defined by means of a signal content received in receiving mode.

12. Method according to at least one of claims 1 to 1., **characterized in that** the temporal position and/or synchronization of the signal coupled into the resonant circut in transmitting mode is coordinated by means of a signal content received in receiving mode to prevent superimpositions with further communication components.

13. Circuit device for the handling of a signal transfer on the basis of quasi-electrostatic interaction effects, with a capacitor device (C), which is incorporated in a resonant circuit, acting as the signal interface, **characterized in that** the circuit device is configured so that, during operation of the circuit device, in a receiving mode the resonant circuit is connected as a parallel resonant circuit and in transmitting mole as a series resonant circuit.

14. Circuit device according to claim 13, **characterized in that** the resonant circuit is coupled to a microcontroller and tie resonant circuit is linked with the microcontroller in receiving mode by coupling to a highly resistive signal-tapping system (e.g. comparator).

15. Circuit device according to claim 13 or 14, **characterized in that** the circuit device is configured and structured so that functional changeover from a passive configuration predominant in receiving mode into a transmitting mode can be effected by way of a port or impedance changeover.

16. Circuit device according to at least one of claims 13 to 15, **characterized in that,** during port or impedance changeover (F1, P2), a parallel resonant circuit consisting of L2, L3, C4 or I2, L3', L3" and C4 for transmitting mode is convertible into a series resonant circuit consisting of L3 and C4, or L3', L3 and C4 for the particularly passive receiving mode.

17. Circuit device according to at least one of claims 13 to 15, **characterized in that** during transmission a transmitter consisting of L1, L2 performs the function of voltage boosting, while in receiving mode it is also part of the parallel resonant circuit with the inductor L2.

18. Circuit device according to at least one of claims 13 to 17, **characterized in that** during transmission a level shifter performs the function of a voltage booster, while in receiving mode it is in a highly resistive state and that changeover in to the highly resistive state is effected by the microcontroller at the end of a transmission cycle.

19. Circuit device according to at least one of claims 13 to 18, **characterized in that** in receiving mode the resonance frequercy of the parallel resonant circuit is lower than that of the series resonant circuit during transmission, and/or that operation is performed by two different frequencies in both directions of bidirectional transmission.

20. Circuit device according to at least one of claims 13 to 9, **characterized in that,** during QPSK modulation, the two requised orthogonal carrier signals are generated by the microcontroller at port P1 and port P2.

21. Circuit device according to at least one of claims 13 to 20, **characterized in that** the carrier signals issued at port P1 and port P2 are added at the series resonant circuit.

22. Circuit device according to at least one of claims 13 to 21, **characterized in that** the transmitter takes the form of a coal arrangement.

23. Circuit device according to at least one of claims 13 to 22, **characterized in that** the transmitter is realized in the form of a pair of galvanically separated coils.

24. Circuit device according to at least one of claims 13 to 23, **characterized in that** the transmitter is realized in the form of a coil with a tap.

25. Circuit device according to at least one of claims 13 to 24 **characterized in that** the series resonant circuit is linked to the microcontroller with the interconnection of a level shifter.

26. Circuit device according to at least one of claims 13 to 25 **characterized in that** the series resonant circuit is linked to the microcontroller via the coupling capacitors C1, C2.

27. Circuit device according to at least one of claims 13 to 26, **characterized in that** the signal-tapping device comprises a receiving system that takes the form of a comparator or of a combination of a booster and a comparator or of a wake-up receiver.

28. Circuit device according to at least one of claims 13 to 27, **characterized in that,** at the input of the active components of the receiving system, a limiting circuit is provided which consists of a series resistor (RS) and two antiparallel-couplet diodes.

29. Circuit device according to at least one of claims 13 to 28, **characterized in that** the comparator forms part of a microcontroller.

30. Circuit device according to at least one of claims 13 to 29, **characterized in that** the parallel resonant circuit comprises a first inductor (L2), which is an integral part of the transmitter, and a second serially coupled inductor (L3).

31. Circuit device according to at least one of claims 13 to 30, **characterized in that** the transmitter is coupled to a microcontroller via a first port and a second port.

32. Circuit device according to at least one of claims 13 to 31, **characterized in that** the coupling is effected with the interconnection of capacitors and a level shifter.

33. Circuit device according to at least one of claims 13 to 32, **characterized in that** the coupling between the microcontro ler and the transmitter is effected with the integration of a level shifter (for voltage boosting).

34. Circuit device according to at least one of claims 13 to 33, **characterized in that,** in the event of the circuit device being configured to generate a transmission signal on the basis of a QPSK process, each port envisaged for linking the transmitter is assigned a circuit for the purpose of voltage boosting ( evel shifter).

35. Circuit device according to at least one of claims 13 to 34, **characterized in that** the microcontroller is designed and configured so that it checks an event present at the signal-tapping device for the fulfilment of certain criterie and particularly information content (e.g. data).

36. Circuit device according to at least one of claims 13 to 35, **characterized in that** the microcontroller is designed ard configured so that it coordinates (e.g. codes) the information content of the signal to be transmitted on the basis of information contents (e.g. data) which are received duri g receiving mode.

37. Circuit device according to at least one of claims 13 to 36, **characterized in that** it is incorporated in a check-card-like structure.

38. Circuit device according to at least one of claims 13 to 7, **characterized in that** it is incorporated in a key.

39. Circuit device according to at least one of claims 13 to 38, **characterized in that** it is incorporated in an article of daily use and particularly in a replaceable component of said article (e.g. rechargeable battery compartment lid).

40. Circuit device according to at least one of claims 13 to 39, **characterized in that** it is incorporated in an object of value.

## Revendications

1. Procédé pour transmettre des signaux sur la base d'effets d'interaction quasi-électrostatiques faisant appel à un montage de circuit à diriger par l'utilisateur, dans lequel un dispositif de condensateur est utilisé en tant qu'interface de signal, qui est intégré dans un circuit oscillant,
**caractérisé en ce que** pendant le fonctionnement du montage de circuit dans un mode de réception, le circuit oscillant fonctionne comme circuit oscillant en parallèle et que le circuit oscillant fonctionne comme circuit oscillant en série dans un mode d'émission.

2. Procédé selon la revendication 1, **caractérisé en ce que** dans le cadre du mode de réception, le circuit oscillant est mis dans un état de couplage à haute impédance à un dispositif de prélèvement de signaux (par exemple un comparateur).

3. Procédé selon la revendication 1 ou 2, **caractérisé en ce que** le raccordement du circuit oscillant en série at microrégisseur est réalisé par un arrangement d'enroulements fonctionnant comme transmetteur.

4. Procédé selon au moins l'une des revendications 1 à 3 **caractérisé en ce que** le mode de réception et le mode d'émission sont réciproquement décalés dans le temps.

5. Procédé selon au moins l'une des revendications 1 à 4, **caractérisé en ce que** dans le cadre du mode de réception un signal de réveil est prélevé par l'intermédiaire du disposit of de prélèvement de signaux.

6. Procédé selon au moins l'une des revendications 1 à 5, **caractérisé en ce que** le signal présent au dispositif le prélèvement de signaux comporte une fréquence porteuse.

7. Procédé selon au moins l'une des revendications 1 à 6, **caractérisé en ce que** le signal présent au dispositif de prélèvement de signaux comporte un signal de synchronisation ou de temporisateur.

8. Procédé selon au moins l'une des revendications 1 à 7, **caractérisé en ce que** le montage de circuit fonctionne dans le cadre du mode d'émission d'après au moins un des procédés de modulation suivants : ASK, FSK, PSK ou QPSK.

9. Procédé selon au moins l'une des revendications 1 à 8, **caractérisé en ce que** le circuit oscillant, dans le cadre du mode de réception, fonctionne avec une autre inductivité et par conséquent avec une autre fréquence de résonance que dans le cadre du mode d'émission.

10. Procédé selon au moins l'une des revendications 1 à 9, **caractérisé en ce que** le signal émis dans le cadre du mode d'émission est codé ou conditionné sur la base d'un contenu de signal reçu pendant le mode de réception précédent.

11. Procédé selon au moins l'une des revendications 1 à 10, **caractérisé en ce qu'**une définition de protocole se fait par un contenu de signal reçu dans le cadre du mode de réception.

12. Procédé selon au moins l'une des revendication 1 à 11, **caractérisé en ce que** par un contenu de signal reçu dans le cadre du mode de réception un réglage de la position dans le temps et/ou de la synchronisation du signal couplé dans le circuit oscillant dans le cadre du mode d'émission se fait pour éviter des chevauchements avec d'autres composants de communication.

13. Montage de circuit pour la réalisation d'un transfert de signaux sur la base d'effets d'interaction quasi-électrostatiques comportant un dispositif de condensateur (C) servant d'interface de signaux, qui est intégré dans un circuit oscillant, **caractérisé en ce que** le montage est configuré de manière à ce que pendant le fonctionnement du montage de circuit dans un mode de réception, le circuit oscillant est réalisé sous forme de circuit oscillant en parallèle et dans le cadre du mode d'émission, le circuit oscillant est réalisé sous forme de circuit oscillant en série.

14. Montage de circuit selon la revendication 13, **caractérisé en ce que** le circuit oscillant est couplé à un microrégisseur et que le raccordement du circuit oscillant aux microrégisseur est réalisé dans le cadre du mode d'émission par le couplage à un système de prélèvement de signaux à haute impédance (par exemple un comparateur).

15. Montage de circuit selon les revendications 13 ou 14, **caractérisé en ce que** le montage est configuré et conçu de manière à ce que la commutation fonctionnelle à partir d'une configuration passive régnant dans le mode de réception dans un fonctionnement en émission est réalisable moyennant une commutation de port ou d'impédance.

16. Montage de circuit selon au moins l'une des revendications 13 à 15, **caractérisé en ce que** dans le cadre de la commutation de port ou d'impédance (P1, P2) un circuit oscillant en parallèle consistant en L2, L3, C4 ou L2, L3', L3" ou C4 pour le fonctionnement en émission est convertible dans un circuit oscillant en série consistant en L3 et C4 ou L3', L3" et C4 pour le fonctionnement en réception surtout passif.

17. Montage de circuit selon au moins l'une des revendications 13 à 15, **caractérisé en ce que** dans le cas d'émission, un transmetteur consistant en L1, L2 exerce la fonction d'une augmentation de la tension, alors que dans le fonctionnement en réception avec l'inductivité L2 il fait aussi partie du circuit oscillant en parallèle.

18. Montage de circuit selon au moins l'une des revendications 13 à 17, **caractérisé en ce que** dans le cas d'émission un décaleur de niveau assume la fonction d'une augmentation de la tension alors que dans le fonctionnement en réception, il se trouve dans un état de haute impédance, et que la commutation vers l'état de haute impédance se fait par le microrégisseur à la fin d'un cycle d'émission.

19. Montage de circuit selon au moins l'une des revendications 13 à 18, **caractérisé en ce que** dans le fonctionnement en réception, la fréquence de résonance du circuit oscillant en parallèle est plus basse que pour le circuit oscillant dans le cas d'émission, et/ou que dans les deux directions de la transmission bidirectionnelle, on opère à deux fréquences différentes.

20. Montage de circuit selon au moins l'une des revendications 13 à 19, **caractérisé en ce que** dans la modulation QPSK, les deux signaux de porteuse orthogonaux nécessaires sont produits par le microrégisseur au port P1 et au port P2.

21. Montage de circuit selon au moins l'une des revendications 13 à 20, **caractérisé en ce que** les signaux de porteuse émis aux ports P1 et P2 sont additionnés au circuit oscillant en série.

22. Montage de circuit selon au moins l'une des revendications 13 à 21, **caractérisé en ce que** le transmetteur est formé par un arrangement d'enroulements.

23. Montage de circuit selon au moins l'une des revendications 13 à 22, **caractérisé en ce que** le transmetteur est réalisé en tant que paire d'enroulements galvaniquement séparée.

24. Montage de circuit selon au moins l'une des revendications 13 à 23, **caractérisé en ce que** le transmetteur est réalisé comme enroulement avec une prise de réglage.

25. Montage de circuit selon au moins l'une des revendications 13 à 24, **caractérisé en ce que** le raccordement du circuit oscillant en série au microrégisseur est réalisé par la connexion d'un décaleur de niveau.

26. Montage de circuit selon au moins l'une des revendications 13 à 25, **caractérisé en ce que** le raccordement du circuit oscillant en série au microrégisseur se fait par les condensateurs de couplage (C1, C2).

27. Montage de circuit selon au moins l'une des revendications 13 à 26, **caractérisé en ce que** le dispositif de prélèvement de signaux comporte un système de réception qui est formé comme comparateur ou comme combinaison d'un amplificateur et d'un comparateur, ou comme récepteur de réveil.

28. Montage de circuit selon au moins l'une des revendications 13 à 27, **caractérisé en ce qu'**à l'entrée des composants actifs du système de réception, un circuit limiteur est prévu qui consiste en une résistance en série (RS) et deux diodes montées en antiparallèle.

29. Montage de circuit selon au moins l'une des revendications 13 à 28, **caractérisé en ce que** le comparateur fait partie d'un microrégisseur.

30. Montage de circuit selon au moins l'une des revendications 13 à 29, **caractérisé en ce que** le circuit oscillant en parallèle comprend une première inductivité (L2) qui est une partie intégrante du transmetteur et comprend une seconde inductivité (L3) couplée en série.

31. Montage de circuit selon au moins l'une des revendications 13 à 30, **caractérisé en ce que** le transmetteur est couplé à un microrégisseur par l'intermédiaire d'un premier port et d'un second port.

32. Montage de circuit selon au moins l'une des revendications 13 à 31, **caractérisé en ce que** le couplage est réalisé par la connexion entre des condensateurs et un décaleur de niveau.

33. Montage de circuit selon au moins l'une des revendications 13 à 32, **caractérisé en ce que** le couplage entre le microrégisseur et le transmetteur est réalisé par l'intégration d'un décaleur de niveau (convertisseur de niveau pour l'augmentation de la tension).

34. Montage de circuit selon au moins l'une des revendications 13 à 33, **caractérisé en ce que** dans le cas d'une configuration du montage pour générer un signal d'émission sur la base d'un procédé QPSK, chaque port prévu pour le raccordement du transmetteur est associé à un circuit (décaleur de niveau) servant à l'augmentation de la tension.

35. Montage de circuit selon au moins l'une des revendications 13 à 34, **caractérisé en ce que** le microrégisseur est formé et configuré de manière à ce que celui-ci vérifie un événement présent au dispositif de prélèvement de signaux quant à la réalisation de critères prescripts, notamment de contenus d'information (par exemple données).

36. Montage de circuit selon au moins l'une des revendications 13 à 35, **caractérisé en ce que** le microrégisseur est formé et configuré de manière à ce que celui-ci effectue sur la base de contenus d'information (par exemple données) qui sont reçus pendant le mode de réception, un réglage (par exemple codage) du contenu d'information du signal à émettre.

37. Montage de circuit selon au moins l'une des revendications 13 à 36, **caractérisé en ce que** celui-ci est intégré dans une structure semblable à une carte de chèque.

38. Montage de circuit selon au moins l'une des revendications 13 à 37, **caractérisé en ce que** celui-ci est intégré dans une clé.

39. Montage de circuit selon au moins l'une des revendications 13 à 38, **caractérisé en ce que** celui-ci est intégré dans un objet utilitaire notamment dans un composant échangeable de celui-ci (par exemple couvercle de compartiment d'accumulateur).

40. Montage de circuit selon au moins l'une des revendications 13 à 39, **caractérisé en ce que** celui-ci est intégré dans un objet de valeur.
